# EUROPEAN PATENT SPECIFICATION

(11) **EP 3 999 738 B1**
(45) Date of publication and mention of the grant of the patent: **20.09.2023**
(21) Application number: 20749980.7
(22) Date of filing: 10.07.2020
(51) Int. Cl.: F03B 13/06, F24T 10/20, F03B 3/10, F03B 13/02

(54) **MULTI-MODE SUBTERRANEAN ENERGY SYSTEM**
UNTERIRDISCHES MULTIMODALES ENERGIESYSTEM
SYSTÈME D'ÉNERGIE SOUTERRAINE MULTIMODE

(30) Priority: 19.07.2019 NO 20190911
(43) Date of publication of application: 25.05.2022
(73) Proprietor: Gudesen, Hans Gude, 1639 Gamle Fredrikstad (NO)
(72) Inventor: Gudesen, Hans Gude, 1639 Gamle Fredrikstad (NO)
(74) Representative: Acapo AS
(86) International application number: PCT/NO2020/050195
(87) International publication number: WO 2021/015624

(56) References cited:
- CN-A- 102 261 299
- JP-A- 2016 065 492
- US-A- 4 282 444
- US-A1- 2011 233 937

## Description

### Field of the invention

The present invention relates to a subterranean infrastructure and method for generation of hydroelectric power. More specifically it relates to a multi-mode subterranean energy system and a related multi-mode subterranean energy production method.

### Background of the invention

In many parts of the world there exist regions deep underground that under the right circumstances can receive large volumes of water. This has been exploited for removal of waste water, by transferring water through shafts drilled from the surface and down to natural recipients that are in the form of cavities, porous rock or lagoons. Such disposal practices has been employed over time spans of several years and on an industrial scale. In many cases, the vertical height between the surface and the recipient is in the range of hundreds to thousands of meters, which should indicate a significant potential for generation of hydroelectric power. As an example, the gravitational potential energy drop of water brought down from the surface to a cavity of 1 km³ at a depth of 1000 m is 2,8 TWh. So far, there has been little or no interest in exploiting these opportunities. This may in large part be traced to technical issues, in particular uncertainties and risks linked to the ability of the subterranean recipient to receive water in the quantities and at the flow rates required. In many cases, the recipient may be flow limited, i.e. it may be able to accumulate large volumes of water over an extended period of time, but is limited in its ability to accept high volumes over shorter time periods. This flow limitation impacts directly on the electrical power that can be extracted and represents a serious impediment to commercial exploitation. An example of an existing subterranean energy system is shown in CN 102 261 299 A.

### Objects of the present invention

It is a major object of the present invention to introduce a subterranean hydroelectric system and method where water from a surface reservoir is passed through a turbine before ultimately being released into a subterranean recipient, and where hydroelectric power can be extracted at high power levels even in cases where the recipient is flow limited.

### Summary of the invention

A first aspect of the invention is a multimode subterranean energy system arranged in a landmass with a landmass surface. The energy system comprising an intake tunnel connected to an upper reservoir of water, a vertical shaft connected to the intake tunnel, at least one turbine/pump unit arranged to interact with water in the vertical shaft, an underground cavity connected via a cavity tunnel to a lower end of the vertical shaft, where the cavity tunnel with a lower end is connected to the lower end of the vertical shaft, and an upper end connected to the cavity. The energy system further comprises a recipient tunnel with an upper end connected to a lower end of the vertical shaft, and a lower end connected to a subterranean recipient located at a lower elevation than the underground cavity, and water flow control means arranged to separately control water flow through the vertical shaft, the cavity tunnel, and the recipient tunnel.

The energy system can be arranged to operate in the following modes by the water control means and the turbine/pump unit:
i) In a Direct Energy Production Mode opening for water flow through the vertical shaft and the recipient tunnel, closing the cavity tunnel, and allowing water flow from the upper reservoir to the recipient, and producing energy;
ii) In a Stored Energy Discharge Mode opening for water flow through the vertical shaft (3), closing the recipient tunnel, opening the cavity tunnel, allowing water flow from the upper reservoir to the cavity, and producing energy;
iii) In a Direct Energy Storage Mode opening for water flow through the vertical shaft, closing the recipient tunnel, opening the cavity tunnel, storing energy by pumping water from the cavity to the reservoir; and
iv) In an Indirect Energy Storage Mode closing the vertical shaft, opening the recipient tunnel and the cavity tunnel, storing energy by allowing water from the cavity to flow into the recipient.

The energy system can comprise a control system arranged to perform coordinated control of the water flow control means and the turbine/pump unit.

Optionally, the water flow control means comprises a reservoir water flow control unit arranged in the vertical shaft, a recipient water flow control unit arranged in the recipient tunnel, and a cavity water flow control unit arranged in the cavity tunnel.

Optionally, the vertical shaft is arranged with an opening to the surface of the land mass.

Optionally, the system further comprises at least one shaft connected at a lower end to the cavity and extending to an opening in the surface of the landmass, allowing transport of air between the cavity and the atmosphere above the landmass.

Optionally, the subterranean recipient is a void volume or a porous volume formed by mining or dissolution of salt.

A further aspect of the invention is a multimode subterranean energy production method, where the energy production method uses the multimode subterranean energy system as described above, and where the method comprises the following steps:
- selecting one of the modes i)-iv) described above;
- operating the water control means and the turbine/pump unit according to the selected mode; and
- terminating operation or returning to the step of selecting one of the modes.

### Description of the diagrams

The above and further features of the invention are set forth with particularity in the appended claims and together with advantages thereof will become clearer from consideration of the following detailed description of an exemplary embodiment of the invention given with reference to the accompanying drawing.

The invention will be further described below in connection with exemplary embodiments which are schematically shown in the drawing, wherein:

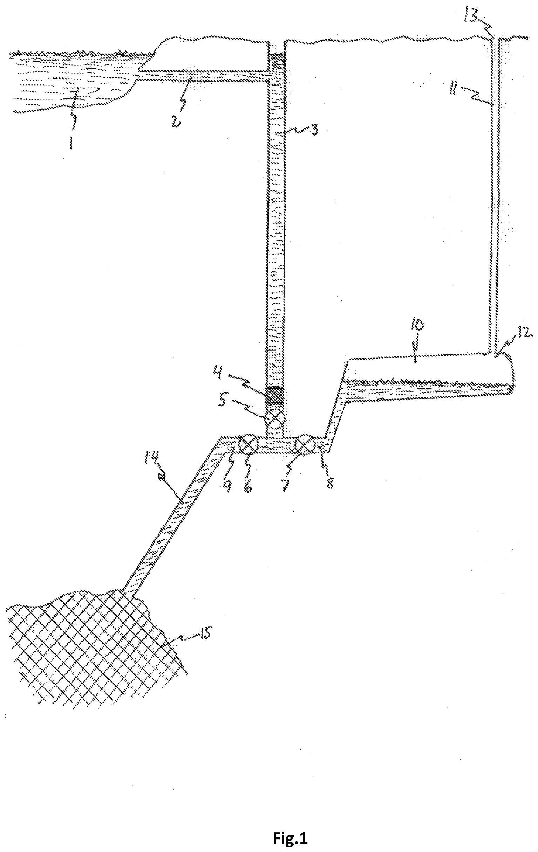

Fig.1 discloses a multimode subterranean energy system according to the present invention.

### List of reference numbers in figures

- 1: Upper reservoir
- 2: Intake tunnel
- 3: Vertical shaft
- 4: Turbine/pump unit
- 5: Vertical shaft water flow control unit
- 6: Recipient tunnel water flow control unit
- 7: Cavity tunnel water flow control unit
- 8: Cavity tunnel
- 9: Recipient tunnel - horizontal part
- 10: Underground cavity
- 11: Air venting shaft
- 12: Top of cavity
- 13: Surface of land mass
- 14: Recipient tunnel/shaft
- 15: Recipient

### Description of preferred embodiments of the invention

Various aspects of the disclosure are described more fully hereinafter with reference to the accompanying drawing. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The basic principles shall now be described in detail by reference to **Fig.1**, which shows one embodiment of the present invention:
The upper reservoir (**1**) is a large body of water such as the sea. An intake tunnel (**2**) transports water from the reservoir to a vertical shaft (**3**), at the bottom of which is located a turbine/pump unit (**4**). A water flow control unit (**5**) which is located below the turbine/pump unit controls the flow of water through the turbine/pump unit. Two more water flow control units (**6**), (**7**) are located in two tunnels (**8**), (**9**) branching off from the bottom of the vertical shaft (**1**). The tunnel (**8**) debouches at the lower end of an underground cavity (**10**) which forms a lower reservoir for water in the system; the tunnel (**8**) referred to as the cavity tunnel (**8**). An air venting shaft (**11**) extends from the top (**12**) of the cavity to the surface (**13**). The tunnel (**9**) connects to a shaft (**14**) which extends downwards and can transport water to an underground recipient (**15**). The combination of the tunnel (**9**), which is optional, and the shaft (**14**) is referred to as the recipient tunnel (**14**).The underground recipient (**15**) is capable of receiving large amounts of water and may be, e.g., a void or a porous or fractured structure which is partly filled with gas or liquid.

The system illustrated in **Fig.1** may be operated in different modes to accommodate different requirements that may occur over time:
- In the **direct energy production mode,** the water flow control units (**5**) and (**6**) are open and the water control unit (**7**) is closed. Water is drawn from the reservoir (**1**) and flows through the unit (**4**) which functions as a turbine to deliver electrical energy. Spent water thereafter flows through the tunnel (**9**) and the shaft (**14**) before being received in the underground recipient (**15**). Water flowing into the underground recipient is redistributed or transported away, encountering significantly less counterpressure than the hydrostatic pressure generated by the head of water generated within the shaft (**14**).
- In the **stored energy discharge mode**, the water flow control units (**5**) and (**7**) are open and the water control unit (**6**) is closed. Water is drawn from the reservoir (**1**) and flows through the unit (**4**) which functions as a turbine to deliver electrical energy. Spent water thereafter flows through the tunnel (**8**) and into the underground cavity (**10**) which is gradually filled up from below. As the water level rises, air escapes from the top (**12**) of the cavity through the vertical shaft (**11**) to the surface at (**13**). Depending on operative decisions, the water level in the cavity (**10**) may be kept below the top (**12**) of the cavity at all times, or it may be allowed to rise into the vertical shaft (**11**).
- In the **direct energy storage mode**, the water flow control units (**5**) and (**7**) are open and the water flow control unit (**6**) is closed. The underground cavity (**10**) is partially or completely filled with water, which is evacuated from the cavity and pumped up the vertical shaft (**3**) by means of the unit (**4**) which now acts as a pump. Electrical energy consumed by the pump is thus converted to potential energy of the water raised from the level of the underground cavity (**10**) to the upper reservoir (**1**). Thus, the system is charged, using the electric battery analogy.
- In the **indirect energy storage mode,** the water flow control units (**6**) and (**7**) are open and the water flow control unit (**5**) is closed. The underground cavity (**10**) is partially or completely filled with water, which is evacuated from the cavity (**10**) by allowing water to pass by gravity through the tunnels (**8**), (**9**) and the shaft (**14**) and into the underground recipient (**15**). This process can proceed over considerable time and can be adapted for a wide range of local geologies.

Taken together, these various modes of operation represent the enabling elements to achieve the major goal of the present invention, which is flexible and high power generation of electrical energy, even in the cases where the flow of water into the underground recipient (**15**) is rate limited. The latter shall be the case when the underground recipient (**15**) has the capacity to accommodate large amounts of water but limited capacity to transport the water away quickly. An example of this would be where the underground recipient (**15**) is filled with porous material which has restricted permeability. Another example would be where the underground recipient (**15**) contains gas or liquid which is displaced by the water from the shaft (**14**), which has a higher pressure due to the head of water in the hydraulic system represented by the shaft (**14**), the underground cavity (**10**) and the vertical shaft (**11**). Thus, during periods of inactivity, i.e. when no electric power is received from or delivered to the outside, the system can be configured in the **indirect energy storage mode** to gradually transfer water from the underground cavity (**10**) to the underground recipient (**15**). This effectively charges the system and prepares it for operation in the **energy discharge mode**, with rapid access to power at maximum turbine rating (unit (**4**)).

The operation modes and their associated configurations are be summed up in the following Table 1:

**Table 1 - Summary of operation modes**

| **Mode** | **Water flow control** | | | **Turbine/pump** |
|---|---|---|---|---|
| | **Vertical shaft** | **Recipient** | **Cavity** | |
| Direct Energy Production | Open | Open | Closed | Turbine |
| Stored Energy Discharge | Open | Closed | Open | Turbine |
| Direct Energy Storage | Open | Closed | Open | Pump |
| Indirect Energy Storage | Closed | Open | Open | - |

An important issue is the availability of geological formations that can constitute the recipient (**15**). Injection of waste water into porous rock structures deep underground has been practiced for decades in many parts of the world, in connection with oil and mining operations and chemical industries producing contaminated water. As of 2012, there were more than 680,000 injection wells in USA alone. The injected volumes have been very large: Thus, during the past several decades, an accumulated volume of 23 km³ of water has been injected into the Western Canada Sedimentary Basin, and several times this volume have been injected in Texas alone since 1998 (cf. Grant Ferguson: "Deep Injection of Waste Water in the Western Canada Sedimentary Basin", Groundwater Vol.53, March-April 2015, pp. 187-194). The ability of recipients to receive large volumes of water while avoiding high back pressure to build up may vary within wide limits. In cases where it is desirable to enhance the drainage capacity of a given well, well known strategies may be implemented as are known from drilling for water and oil, i.e. hydraulic fracking and controlled downhole explosions. Void and pore volumes left by mining or leaching (anthropogenic or natural) of underground rock salt deposits (halite) are of particular interest in the present context. They exist in many locations around the world and represent enormous volumes. Controlled dissolution of salt beds and salt domes by remotely controlled water jetting can be used to create subterranean caverns in a cost effective manner.

## Claims

1. A multimode subterranean energy system arranged in a landmass with a landmass surface, the energy system comprising the following:
- an intake tunnel (2) connected to an upper reservoir of water (1);
- a vertical shaft (3) connected to the intake tunnel (2),
- at least one turbine/pump unit (4) arranged to interact with water in the vertical shaft (3),
- an underground cavity (10) connected via a cavity tunnel (8) to a lower end of the vertical shaft (3), and
- the cavity tunnel (8) with a lower end connected to the lower end of the vertical shaft (3) and an upper end connected to the cavity (10);
wherein the energy system further comprises:
- a recipient tunnel (14) with an upper end connected to a lower end of the vertical shaft (3), and a lower end connected to a subterranean recipient (15) located at a lower elevation than the underground cavity (10); and
- water flow control means (5, 6, 7) arranged to separately control water flow through the vertical shaft (3), the cavity tunnel (8), and the recipient tunnel (14).

2. A multimode subterranean energy system according to claim 1, where the energy system is arranged to operate in the following modes by the water control means (5, 6, 7) and the turbine/pump unit (4):
i) In a Direct Energy Production Mode opening for water flow through the vertical shaft (3) and the recipient tunnel (14), closing the cavity tunnel (8), and allowing water flow from the upper reservoir (1) to the recipient (15), and producing energy;
ii) In a Stored Energy Discharge Mode opening for water flow through the vertical shaft (3), closing the recipient tunnel (14), opening the cavity tunnel (8), allowing water flow from the upper reservoir (1) to the cavity (10), and producing energy;
iii) In a Direct Energy Storage Mode opening for water flow through the vertical shaft (3), closing the recipient tunnel (14), opening the cavity tunnel (8), storing energy by pumping water from the cavity (10) to the reservoir (1); and
iv) In a Indirect Energy Storage Mode closing the vertical shaft (3), opening the recipient tunnel (14) and the cavity tunnel (8), storing energy by allowing water from the cavity (10) to flow into the recipient (15).

3. A multimode subterranean energy system according to claim 2, where the energy system comprises a control system arranged to perform coordinated control of the water flow control means (5, 6, 7) and the turbine/pump unit (4).

4. A multimode subterranean energy system according to one of the claims above, where water flow control means comprises a vertical shaft water flow control unit (5) arranged in the vertical shaft (3), a recipient water flow control unit (6) arranged in the recipient tunnel (14), and a cavity water flow control unit (7) arranged in the cavity tunnel (8).

5. A multimode subterranean energy system according to one of the claims above, where the vertical shaft (3) is arranged with an opening to the surface of the land mass.

6. A multimode subterranean energy system according to one of the claims above, where the system further comprises at least one shaft (11) connected at a lower end to the cavity (10) and extending to an opening in the surface of the landmass, allowing transport of air between the cavity (10) and the atmosphere above the landmass.

7. A multimode subterranean energy system according to one of the claims above, where the subterranean recipient (15) is a void volume or a porous volume formed by mining or dissolution of salt.

8. A multimode subterranean energy production method, where the energy production method uses the multimode subterranean energy system according to one of the claims above, and where the method comprises the following steps:
- selecting one of the modes i)-iv) according to claim 2;
- operating the water control means (5, 6, 7) and the turbine/pump unit (4) according to the selected mode; and
- terminating operation or returning to the step of selecting one of the modes.

## Patentansprüche

1. Unterirdisches multimodales Energiesystem, das in einer Landmasse mit einer Landmasseoberfläche angeordnet ist, wobei das Energiesystem aufweist:
- einen Einlaßstollen (2), der mit einem oberen Wasserreservoir (1) verbunden ist;
- einen vertikalen Schacht (3), der mit dem Einlaßstollen (2) verbunden ist,
- mindestens eine Turbinen-/Pumpeneinheit (4), die dazu angeordnet ist, mit dem Wasser in dem vertikalen Schacht (3) zusammenzuwirken,
- einen unterirdischen Hohlraum (10), der über einen Hohlraumstollen (8) mit einem unteren Ende des vertikalen Schachts (3) verbunden ist, und
- wobei ein unteres Ende des Hohlraumstollens (8) mit dem unteren Ende des vertikalen Schachts (3) und ein oberes Ende mit dem Hohlraum (10) verbunden ist;
wobei das Energiesystem ferner aufweist:
- einen Auffangstollen (14) mit einem oberen Ende, das mit einem unteren Ende des vertikalen Schachts (3) verbunden ist, und einem unteren Ende, das mit einem unterirdischen Behälter (15) verbunden ist, der sich auf einem niedrigeren Niveau als der unterirdische Hohlraum (10) befindet; und
- Wasserfluss-Steuerungsmittel (5, 6, 7), die dazu angeordnet sind, einen Wasserfluss durch den vertikalen Schacht (3), den Hohlraumstollen (8) und den Auffangstollen (14) getrennt steuern.

2. Unterirdisches multimodales Energiesystem nach Anspruch 1, wobei das Energiesystem dazu eingerichtet ist, durch die Wasserfluss-Steuerungsmittel (5, 6, 7) und die Turbinen-/Pumpeneinheit (4) in den folgenden Modi betrieben zu werden:
i) in einem Direktenerqieerzeuqunqsmodus, der den vertikalen Schacht (3) und den Auffangstollen (14) für einen Wasserdurchfluss öffnet, den Hohlraumstollen (8) schließt und einen Wasserfluss vom oberen Reservoir (1) zum Behälter (15) ermöglicht und Energie erzeugt;
ii) in einem Modus zur Abgabe gespeicherter Energie, der den vertikalen Schacht (3) für einen Wasserdurchfluss öffnet, der Auffangstollen (14) schließt, den Hohlraumstollen (8) öffnet, wodurch ein Wasserfluss vom oberen Behälter (1) zum Hohlraum (10) ermöglicht und Energie erzeugt wird;
iii) in einem Modus zur Direktspeicherung von Energie, der den vertikalen Schacht (3) für einen Wasserdurchfluss öffnet, den Auffangstollen (14) schließt, den Hohlraumstollen (8) öffnet und Energie durch Pumpen von Wasser aus dem Hohlraum (10) in den Behälter (1) speichert; und
iv) in einem Modus zur indirekten Speicherung von Energie, in dem der vertikale Schacht (3) geschlossen wird, der Auffangstollen (14) und der Hohlraumstollen (8) geöffnet werden und Energie gespeichert wird, indem Wasser aus dem Hohlraum (10) in den Behälter (15) fließen kann.

3. Unterirdisches multimodales Energiesystem nach Anspruch 2, wobei das Energiesystem ein Steuersystem umfasst, das dazu angeordnet ist, eine koordinierte Steuerung der Wasserfluss-Steuerungsmittel (5, 6, 7) und der Turbinen-/Pumpeneinheit (4) durchzuführen.

4. Unterirdisches multimodales Energiesystem nach einem der vorhergehenden Ansprüche, wobei die Wasserfluss-Steuerungsmittel eine Wasserdurchfluss-Steuerungseinheit (5) für den vertikalen Schacht, die in dem vertikalen Schacht (3) angeordnet ist, eine Wasserdurchfluss-Steuerungseinheit (6) für den Behälter, die in dem Auffangstollen (14) angeordnet ist, und eine Wasserdurchfluss-Steuerungseinheit (7) für den Hohlraum umfasst, die in dem Hohlraumstollen (8) angeordnet ist.

5. Unterirdisches multimodales Energiesystem nach einem der vorhergehenden Ansprüche, wobei der vertikale Schacht (3) mit einer Öffnung zur Oberfläche der Landmasse angeordnet ist.

6. Unterirdisches multimodales Energiesystem nach einem der vorhergehenden Ansprüche, wobei das System ferner mindestens einen Schacht (11) umfasst, der an einem unteren Ende mit dem Hohlraum (10) verbunden ist und sich zu einer Öffnung in der Oberfläche der Landmasse erstreckt, was einen Transport von Luft zwischen dem Hohlraum (10) und der Atmosphäre über der Landmasse ermöglicht.

7. Unterirdisches multimodales Energiesystem nach einem der vorhergehenden Ansprüche, wobei der unterirdische Behälter (15) ein Hohlraumvolumen oder ein poröses Volumen ist, welches durch Abbau oder Auflösung von Salz gebildet worden ist.

8. Verfahren zur multimodalen unterirdischen Energiegewinnung, wobei das Energiegewinnungsverfahren das unterirdische multimodale Energiesystem nach einem der vorhergehenden Ansprüche verwendet, und wobei das Verfahren die folgenden Schritte umfasst:
- Auswählen eines der Modi i) - iv) nach Anspruch 2;
- Betreiben der Wasserfluss-Steuerungsmittel (5, 6, 7) und der Turbinen-/Pumpeneinheit (4) entsprechend dem gewählten Modus; und
- Beenden des Betriebs oder Rückkehr zum Schritt des Auswählens eines der Modi.

## Revendications

1. Système d'énergie souterraine multimode agencé dans une masse terrestre avec une surface de masse terrestre, le système d'énergie comprenant les éléments suivants :
- un tunnel d'admission (2) connecté à un réservoir supérieur d'eau (1) ;
- un arbre vertical (3) connecté au tunnel d'admission (2),
- au moins une unité turbine/pompe (4) agencée pour interagir avec de l'eau dans l'arbre vertical (3),
- une cavité souterraine (10) connectée via un tunnel de cavité (8) à une extrémité inférieure de l'arbre vertical (3), et
- le tunnel de cavité (8) présentant une extrémité inférieure raccordée à l'extrémité inférieure de l'arbre vertical (3) et une extrémité supérieure raccordée à la cavité (10) ;
dans lequel le système d'énergie comprend en outre :
- un tunnel récepteur (14) avec une extrémité supérieure raccordée à une extrémité inférieure de l'arbre vertical (3) et une extrémité inférieure raccordée à un récepteur souterrain (15) situé à une élévation inférieure à la cavité souterraine (10) ; et
- un moyen de commande d'un écoulement d'eau (5, 6, 7) agencé de façon à commander séparément l'écoulement d'eau à travers l'arbre vertical (3), le tunnel de cavité (8) et le tunnel récepteur (14).

2. Système d'énergie souterraine multimode selon la revendication 1, dans lequel le système d'énergie est agencé pour fonctionner dans les modes suivants par le biais du moyen de commande de l'eau (5, 6, 7) et l'unité turbine/pompe (4) :
i) dans un mode de production d'énergie direct, en ouvrant pour permettre un écoulement d'eau à travers l'arbre vertical (3) et le tunnel récepteur (14), en fermant le tunnel de cavité (8) et en permettant un écoulement d'eau du réservoir supérieur (1) au récepteur (15) et en produisant de l'énergie ;
ii) dans un mode de décharge de l'énergie stockée, en ouvrant pour permettre un écoulement d'eau à travers l'arbre vertical (3), en fermant le tunnel récepteur (14), en ouvrant le tunnel de cavité (8), en permettant un écoulement d'eau du réservoir supérieur (1) à la cavité 10) et en produisant de l'énergie ;
iii) dans un mode de stockage d'énergie direct, en ouvrant pour permettre un écoulement d'eau à travers l'arbre vertical (3), en fermant le tunnel récepteur (14), en ouvrant le tunnel de cavité (8), en stockant l'énergie en pompant de l'eau de la cavité (10) vers le réservoir (1) ; et
iv) dans un mode de stockage d'énergie indirect en fermant l'arbre vertical (3), en ouvrant le tunnel récepteur (14) et le tunnel de cavité (8), en stockant de l'énergie en permettant à l'eau de la cavité (10) de s'écouler dans le récepteur (15).

3. Système d'énergie souterraine multimode selon la revendication 2, dans lequel le système d'énergie comprend un système de commande agencé pour effectuer une commande coordonnée du moyen de commande de l'écoulement d'eau (5, 6, 7) et de l'unité turbine/pompe (4).

4. Système d'énergie souterraine multimode selon l'une des revendications ci-dessus, dans lequel le moyen de commande de l'écoulement d'eau comprend une unité de commande de l'écoulement d'eau de l'arbre vertical (5) agencée dans l'arbre vertical (3), une unité de commande de l'écoulement d'eau du récepteur (6) agencée dans le tunnel récepteur (14), et une unité de commande de l'écoulement d'eau de la cavité (7) agencée dans le tunnel de cavité (8).

5. Système d'énergie souterraine multimode selon l'une des revendications ci-dessus, dans lequel l'arbre vertical (3) est agencé avec une ouverture sur la surface de la masse terrestre.

6. Système d'énergie souterraine multimode selon l'une des revendications ci-dessus, dans lequel le système comprend en outre au moins un arbre (11) connecté à une extrémité inférieure à la cavité (10) et s'étendant vers une ouverture dans la surface de la masse terrestre, permettant le transport d'air entre la cavité (10) et l'atmosphère au-dessus de la masse terrestre.

7. Système d'énergie souterraine multimode selon l'une des revendications ci-dessus, dans lequel le récepteur souterrain (15) est un volume vide ou un volume poreux formé par exploration minière ou dissolution de sel.

8. Procédé de production d'énergie souterraine multimode, dans lequel le procédé de production d'énergie utilise le système d'énergie souterraine multimode selon l'une des revendications ci-dessus, et où le procédé comprend les étapes suivantes :
- la sélection d'un des modes i) à iv) selon la revendication 2 ;
- l'utilisation du moyen de commande d'eau (5, 6, 7) et de l'unité turbine/pompe (4) selon le mode sélectionné ; et
- le fait de mettre fin au fonctionnement ou de retourner à l'étape de sélection d'un des modes.
